Europäisches Patentamt

European Patent Office

Office européen des brevets

(11) Veröffentlichungsnummer: **0 124 821**
B1

# EUROPÄISCHE PATENTSCHRIFT

(45) Veröffentlichungstag der Patentschrift:
**09.12.87**

(21) Anmeldenummer: **84104575.0**

(22) Anmeldetag: **24.04.84**

(51) Int. Cl.⁴: **F 16 K 1/12, F 16 K 1/34**

(54) **Absperrventil mit einem konischen Ventilsitz.**

(30) Priorität: **09.05.83 DE 3316895**

(43) Veröffentlichungstag der Anmeldung:
**14.11.84 Patentblatt 84/46**

(45) Bekanntmachung des Hinweises auf die Patenterteilung:
**09.12.87 Patentblatt 87/50**

(84) Benannte Vertragsstaaten:
**AT CH DE FR LI**

(56) Entgegenhaltungen:
**BE - A - 522 127
DE - C - 452 903
GB - A - 663 333
GB - A - 759 178
US - A - 1 839 710
US - A - 3 087 511
US - A - 3 669 407**

(73) Patentinhaber: **Siemens Aktiengesellschaft Berlin und München, Wittelsbacherplatz 2, D-8000 München 2 (DE)**

(72) Erfinder: **Schabert, Hans-Peter, Dipl.-Ing., Friedrich-Bauer-Strasse 28, D-8520 Erlangen (DE)**
Erfinder: **Heller, Max, Dipl.-Ing., Dresdener Strasse 18, D-8525 Uttenreuth (DE)**
Erfinder: **Laurer, Erwin, Frankenstrasse 5, D-8521 Möhrendorf (DE)**
Erfinder: **Leinweber, Hans, Dipl.-Ing., Kirchenweg 8, D-8540 Schwabach (DE)**

## Beschreibung

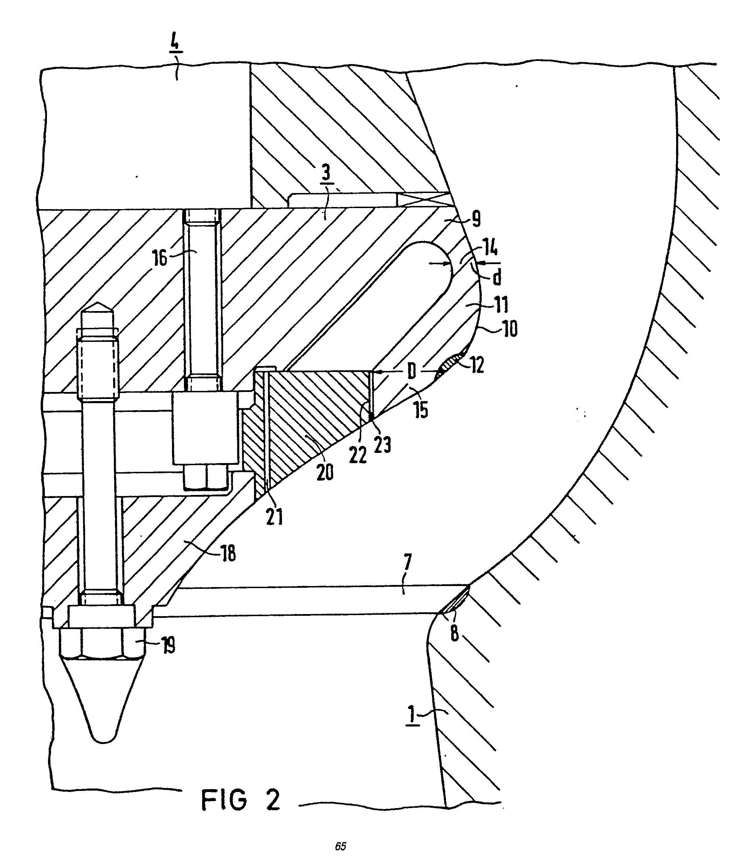

Bei einem aus der US-A-2 192 339 bekannten Absperrventil mit einem konischen Ventilsitz und einem Ventilteller, der mit seinem Rand an dem Ventilsitz anliegt, wobei der Rand die Aussenseite eines Vorsprunges ist, der sich von einem den Ventilsitz überdeckenden Grundkörper in Richtung der Schliessbewegung des Ventiltellers erstreckt, ist der Vorsprung gemäss Fig. 2 ein in den Grundkörper eingeschraubter Ring gleichbleibender Wandstärke. Die Wandstärke ist so gering gewählt, dass sich der Vorsprung zum Zweck der Abdichtung schon bei niedriger axialer Stellkraft leicht an Formabweichungen des Gehäuse-Dichtsitzes anpassen kann, bis er bei weiterem Anstieg der Stellkraft an einem Stützkörper anliegt, der eine vielfach grössere Wandstärke aufweist.

Ferner ist aus der US-A-3 087 511 ein Absperrventil für die Treibstoffe eines Raketenmotors bekannt, dessen Ventilteller im Bereich des Ventilsitzes eine gerundete Aussenkontur hat. Die Wandstärke, gemessen in radialer Richtung, steigt deshalb von dem Wert Null am freien Ende des Vorsprungs auf das Doppelte des Wertes, der am Übergang zu dem konischen Grundkörper vorliegt. Diese Werte und die Lage des Ventilsitzes sind aber nur grob aus der Zeichnung abzuschätzen, denn in der Beschreibung ist die Ausbildung des Ventiltellers nicht behandelt. Vielmehr behandelt die US-A-3 087 511 das Problem des zeitlichen Zusammenwirkens von mehreren verbundenen Ventilen, das die richtige Wirkungsweise des Raketenmotors sicherstellt.

Die Erfindung geht von der Aufgabe aus, ein auch bei Gehäuseverformung dichtbleibendes Absperrventil so zu gestalten, dass es leicht gefertigt werden kann und in seiner Funktion unempfindlich wird gegenüber Korrosionsproduktablagerungen in einem Ringspalt. Andernfalls kann nämlich eine hohe Stellkraft zu einer örtlichen Verquetschung der Dichtkante des Vorsprungs führen, wo sich im Ringspalt Korrosionsprodukte oder ein Fremdkörper abgelagert haben. Diese Verquetschung würde dann bei geringer Dichtkraft zu Undichtigkeit führen. Ein derartiges Nachlassen der Dichtkraft tritt beispielsweise bei eigenmediumbetätigten Ventilen zwangsläufig auf, etwa bei Frischdampfabsperrventilen in Kernkraftwerken. Diese Ventile müssen aber auch bei einem Bruchteil des vollen Dampfdruckes noch dicht bleiben.

Gemäss der Erfindung ist ein Absperrventil mit einem konischen Ventilsitz und einem Ventilteller vorgesehen, der mit seinem Rand an dem Ventilsitz anliegt, wobei der Rand die Aussenseite eines Vorsprunges ist, der sich von einem den Ventilsitz überdeckenden Grundkörper in Richtung der Schliessbewegung des Ventiltellers erstreckt und der Vorsprung von einem in radialer Richtung dünnsten Bereich vor seinem freien Ende im Bereich des Ventilsitzes zu einem Ring mit der 1,5fachen radialen Wanddicke oder mehr verstärkt ist, der ohne radiale Abstützung an dem Grundkörper bei kleinem Verformungswiderstand gegen Ovalisierung den wesentlichen Teil der am Ventilsitz auftretenden Radialkräfte aufnimmt, und wobei der Grundkörper zu einem aus dem Ring in Richtung der Schliessbewegung vortretenden Konus verlängert ist, der zusammen mit dem Vorsprung eine an sich bekannte stromlinienförmige Kontur bildet, mit einem grösseren Spalt zwischen dem Ring und dem Konus als der Verformungsweg des Vorsprunges in radialer Richtung.

Bei der Erfindung kann auf einen besonderen Stützkörper verzichtet werden und damit auch auf die Spalten zwischen Stützkörper und Vorsprung. Die für die Dichtung gewünschte Kraft ergibt sich aus der Verstärkung des Vorsprunges an seinem freien Ende. Sie hat zur Folge, dass aus der axialen Stellkraft im konischen Dichtsitz entstehende Radialkräfte in einem überschaubaren Mass durch Umfangsdruckspannungen in der als Ring wirkenden Verstärkung aufgenommen werden. Dieser Ring entwickelt bei Ovalisierung des Ventilsitzes nur einen kleinen Biegewiderstand, so dass, wie gewünscht, dennoch eine Anpassung des abdichtenden Randes des Ventiltellers an den verformten Ventilsitz im Gehäuse möglich ist.

Die zur Abdichtung aufzubringenden Axialkräfte, d.h. Kräfte in Richtung der Schliessbewegung des Ventiltellers, durchlaufen dagegen unter Erzeugung reiner Längsspannungen einen elastischen Zylinder- oder Kegelbereich zwischen dem verstärkten Rand und dem Ventilteller-Grundkörper, so dass dabei primär keine Biegespannungen auftreten. Deshalb kann dieser Zwischenbereich auch dünnwandig ausgeführt werden, so dass bei radialen Auslenkungen des als Dichtfläche wirkenden Randes im Zug einer Ovalisierung nur verträglich grosse sekundäre Biegespannungen an der Anschlussstelle des Vorsprunges zum Ventilteller-Grundkörper entstehen.

Da der Grundkörper zu einem aus dem Ring in Schliessrichtung vortretenden Konus verlängert ist, der zusammen mit dem Vorsprung eine an sich bekannte stromlinienförmige Kontur bildet, wobei zwischen dem Ring und dem Konus ein grösserer Spalt als der Verformungsweg des Vorsprunges in radialer Richtung vorhanden ist, hat das erfindungsgemässe Absperrventil nur einen geringen Strömungswiderstand. Dies ist ebenfalls wichtig für grosse Durchsätze, wie sie in Frischdampfleitungen von Kernkraftwerken vorliegen. Dazu wird noch bemerkt, dass ein vortretender Konus z.B. in der CH-A-157 733, Fig. 1 dargestellt ist, dort jedoch für einen Ventilkörper mit einem in axialer Richtung aufsitzenden Dichtungsring, bei dem in bezug auf die Dichtung ganz andere Ventilverhältnisse vorliegen.

Der Ring kann bei einer weiteren Ausbildung der Erfindung in radialer Richtung ein- oder mehrfach unterteilt sein, so dass eine aus Ringen zusammengesetzte Zwiebelschalengeometrie entsteht. Jeder Ring ergibt die gewünschte Verstärkung des Vorsprungs in radialer Richtung ohne wesentliche Erhöhung des Biegewiderstandes gegen Ovalisierung. Der Biegewiderstand einer Ring-Querschnittsfläche ist nämlich bestimmt

durch das Flächenträgheitsmoment $bh^3/12$. Wird der Ring also radial unterteilt, z.B. durch zwei konzentrische Ringe mit halber Höhe ersetzt, dann hat jeder der neuen Ringe nur noch 1/8 des ursprünglichen Biegewiderstands. Beide zusammen haben also 1/4 des ursprünglichen Biegewiderstands. Die Aufnahmefähigkeit für Umfangsspannungen bleibt dagegen voll erhalten. Dies gilt besonders für den Fall, dass der Querschnitt der durch Unterteilung entstandenen Ringe in axialer Richtung grösser als in radialer Richtung ist.

Die Ringe können in unterschiedlicher Weise miteinander verbunden sein, um sie gegen unerwünschte Verlagerung zu sichern. Vorzugsweise erfolgt die Verbindung dadurch, dass sie in Form von Nut und Feder in radialer Richtung ineinandergreifen. Die Montage kann mit unterschiedlicher Temperatur der Teile vorgenommen werden, wie bei einer Schrumpfverbindung.

Im Gegensatz zu dem Ventil nach der eingangs genannten US-A-2 192 339 kann der Vorsprung vorteilhaft einen leicht nach aussen oder innen gewölbten Querschnitt haben. Eine Wölbung nach aussen empfiehlt sich dann, wenn gleichzeitig mit der axialen Stellkraft ein Aussendruck auf den Vorsprung wirkt und wenn die Stellkraft mit diesem Aussendruck gemeinsam ansteigt oder absinkt. Dies ist bei eigenmediumbetätigten Ventilen der Fall. Die Wölbung lässt sich in diesem Fall rechnerisch so optimieren, dass der Vorsprung eine besonders niedrige Mindestwandstärke erfordert bei einer vorgegebenen zulässigen Membranspannung in seinem Werkstoff. Dies ermöglicht dann wieder eine besonders leichte Anpassung des Vorsprungs an ein ovalisiertes Gehäuse, so dass Dichtheit auch bei besonders niedrigem Dampfdruck (= Stellkraft) gewährleistet wird.

Zur näheren Erläuterung werden anhand der beiliegenden Zeichnung Ausführungsbeispiele beschrieben. Es zeigt Fig. 1 eine Gesamtansicht eines Absperrventils für Frischdampfleitungen in Kernkraftwerken in einem Vertikalschnitt. Die Fig. 2 und 3 zeigen in Teilschnitten in grösserem Massstab Einzelheiten des Ventiltellers in zwei Ausführungen.

Das Gehäuse 1 des Ventils, das in Richtung der Pfeile 2 durchströmt wird, hat eine Nennweite von 700 mm. Dazu gehört ein Durchtrittsquerschnitt von 630 mm im Bereich des beweglichen Ventiltellers 3, durch den Frischdampf mit 65 bar und einer Temperatur von 280 °C in einer Menge von 500 kg/s möglichst verlustarm hindurchtreten soll.

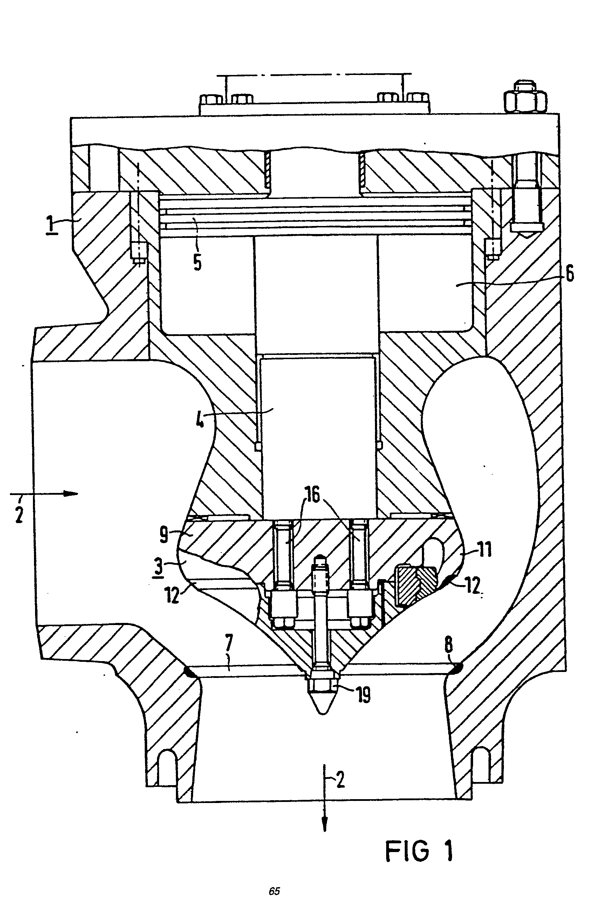

Der Ventilteller 3 ist in der Fig. 1 in der Öffnungsstellung gezeichnet. In dieser wird er über einen Ventilstössel 4 von einem Kolben 5 gehalten, der in einem Zylinder 6 durch Frischdampf betätigt wird. Die Stellung des Ventiltellers 3 kann mit einer Stellungsmeldevorrichtung erfasst werden.

In der Schliessstellung sitzt der Ventilteller 3 auf einem Ventilsitz 7, der durch die Innenkontur des Ventilgehäuses 1 gegeben ist. Dort ist das Gehäuse 1 durch einen als Auftragsschweissung hergestellten Ring 8 aus Stellit gepanzert. Der Ventilsitz 7 ist durch Maschinenbearbeitung als eine ebene Konusfläche ausgebildet. Auf die Konusfläche drückt der Ventilteller 3 mit einer vorgegebenen Schliesskraft.

Der Ventilteller 3 ist strömungsgünstig geformt und umfasst einen Grundkörper 9, der mit Schrauben 16 an dem Stössel 4 befestigt ist. Der Grundkörper 9 trägt an seiner Aussenseite einen Vorsprung 11 als die dem Ventilsitz 7 zugeordnete Gegenkontur, die in der Schliessstellung am Ventilsitz 7 anliegt. Im Vorsprung 11 ist ein entsprechender ebener Konusbereich durch Maschinenbearbeitung eines Stellitringes 12 hergestellt.

Die Fig. 2 zeigt deutlich, dass der Stellitring 12 zu einem Rand 10 an der Aussenseite des Vorsprunges 11 gehört, der sich von dem Grundkörper 9 in Richtung der Ventilbewegung erstreckt. Der Vorsprung 11 ist gegenüber dem dünnsten Bereich 14 mit einer Wanddicke d von 20 mm an seinem freien Ende 15 auf die in radialer Richtung zu messende Wanddicke D=60 mm verstärkt, also auf das 3fache.

Zur Verringerung des Strömungswiderstandes ist an dem Grundkörper 9 eine konische Spitze 18 mit einer Schraube 19 befestigt, die aus dem Vorsprung 11 herausragt. Die Spitze 18 deckt die Schrauben 16 zur Befestigung des Grundkörpers 9 ab. Sie hält ferner einen Ring 20, der ebenfalls zur strömungsgünstigen Ausbildung des Ventiltellers 3 beiträgt und mit Entwässerungsbohrungen 21 versehen ist. Zwischen dem Aussenrand 22 des Ringes 20 und der Verstärkung 15 ist ein Spalt 23 vorhanden, so dass sich der Vorsprung 11 beim Schliessen des Ventils an die Form des Ventilsitzes 7 widerstandsarm anpassen kann, denn der Spalt 23 ist grösser als die grösste radiale Auslenkung des Vorsprungs 11.

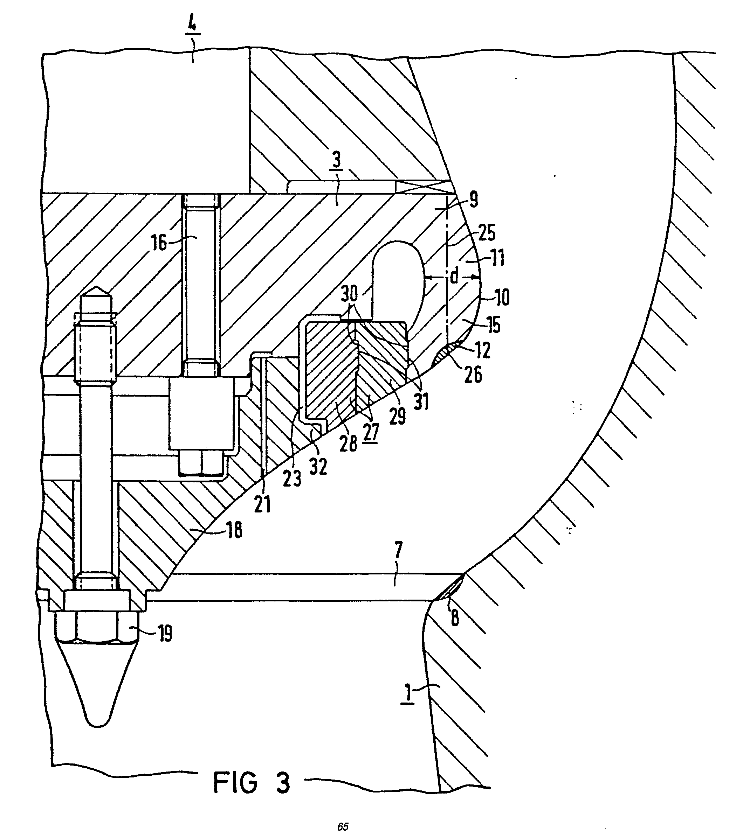

Bei dem Ausführungsbeispiel nach Fig. 3 ist der Ventilteller 3 mit einem nach aussen gewölbten Vorsprung 11 versehen, für den die statisch wirksame Mittellinie durch die strichpunktierte Linie 25 angedeutet ist. Sie verläuft durch die dem Ventilsitz 7 zugekehrte konische Gegenfläche 26 der Stellitpanzerung 12 im Rand 10 des Vorsprunges 11. Hier beträgt die kleinste Wanddicke d wieder 20 mm.

Die Verstärkung 15 hat demgegenüber eine vielfach grössere radiale Dicke, und zwar durch einen Stützring 27, der aus zwei ineinandergeschachtelten Teilen 28 und 29 besteht. Die Teile sind untereinander und mit der Verstärkung 15 durch gleiche Federn 30 und korrespondierende Nuten 31 zusammengehalten, die in radialer Richtung ineinandergreifen. Damit wird eine erhebliche Verstärkung gegen die durch den Dichtungsdruck auftretende radiale Kraft erreicht, ohne dass der Biegewiderstand gegen Ovalisierungsbewegungen zur Anpassung an den Ventilsitz wesentlich erhöht wird. Der Ring 27 ist durch einen vorspringenden Bund 32 des Konus 18 gegen Herausfallen gesichert.

**Patentansprüche**

1. Absperrventil mit einem konischen Ventilsitz (7) und einem Ventilteller (3), der mit seinem Rand (10) an dem Ventilsitz (7) anliegt, wobei der Rand (10) die Aussenseite eines Vorsprunges (11) ist, der sich von einem den Ventilsitz (7) überdeckenden Grundkörper (9) in Richtung der Schliessbewegung des Ventiltellers (3) erstreckt und der Vorsprung (11) von einem in radialer Richtung dünnsten Bereich (14) vor seinem freien Ende im Bereich des Ventilsitzes (7) zu einem Ring (15) mit der 1,5fachen radialen Wanddicke oder mehr verstärkt ist, der ohne radiale Abstützung an dem Grundkörper (9) bei kleinem Verformungswiderstand gegen Ovalisierung den wesentlichen Teil der am Ventilsitz (7) auftretenden Radialkräfte aufnimmt, und wobei der Grundkörper (9) zu einem aus dem Ring (15) in Richtung der Schliessbewegung vortretenden Konus (18) verlängert ist, der zusammen mit dem Vorsprung (11) eine an sich bekannte stromlinienförmige Kontur bildet, mit einem grösseren Spalt (23) zwischen dem Ring (15) und dem Konus (18) als der Verformungsweg des Vorsprunges (11) in radialer Richtung.

2. Absperrventil nach Anspruch 1, dadurch gekennzeichnet, dass der Vorsprung (11) im unverstärkten Bereich (14) eine zylindrische Geometrie hat.

3. Absperrventil nach Anspruch 1 oder 2, dadurch gekennzeichnet, dass der Ring (15) in radialer Richtung ein- oder mehrfach unterteilt ist (Zwiebelschalengeometrie).

4. Absperrventil nach Anspruch 3, dadurch gekennzeichnet, dass der Querschnitt der durch Unterteilung entstandenen Ringe (28, 29) in axialer Richtung grösser als in radialer Richtung ist.

5. Absperrventil nach Anspruch 3 oder 4, dadurch gekennzeichnet, dass die Ringe (28, 29) in Form von Nut (31) und Feder (30) in radialer Richtung ineinandergreifen.

6. Absperrventil nach Anspruch 1 und 3, 4 oder 5, dadurch gekennzeichnet, dass der Konus (18) mit einem vorspringenden Bund (32) zur Halterung oder Sicherung eines Ringes (27) ausgestattet ist.

**Revendications**

1. Vanne d'arrêt à siège (7) conique et à clapet (3) dont le bord (10) s'applique contre le siège (7), le bord étant le côté extérieur d'une partie saillante (11) qui s'étend dans le sens du mouvement de fermeture du clapet (3) à partir d'une embase (9) recouvrant le siège (7) et la partie saillante (11) se renforçant à partir d'une région (14) très mince dans la direction radiale, avant son extrémité libre dans la région du siège (7), en un anneau (15) qui a une épaisseur radiale de paroi une fois et demie plus grande ou plus d'une fois et demie plus grande et qui absorbe, sans appui radial sur l'embase (9), la partie essentielle des forces radiales se produisant sur le siège (7) dans le cas d'une petite résistance à la déformation par ovalisation, l'embase (9) étant prolongée par un cône (18) qui fait saillie à partir de l'anneau (15) dans le sens du mouvement de fermeture et qui forme avec la partie saillante (11) un contour aérodynamique, en soi connu, avec une fente (23) entre l'anneau (15) et le cône (18) plus grande que le trajet de déformation de la partie saillante (11) dans la direction radiale.

2. Vanne d'arrêt suivant la revendication 1, caractérisée en ce que la partie saillante (11) a, dans la région (14) non renforcée, une géométrie cylindrique.

3. Vanne d'arrêt suivant la revendication 1 ou 2, caractérisée en ce que l'anneau (15) est subdivisé une ou plusieurs fois en direction radiale (géométrie en pelure d'oignon).

4. Vanne d'arrêt suivant la revendication 3, caractérisée en ce que la section transversale des anneaux (28, 29) créés par la subdivision est plus grande en direction axiale qu'en direction radiale.

5. Vanne d'arrêt suivant la revendication 3 ou 4, caractérisée en ce que les anneaux (28, 29) s'emboîtent en direction radiale sous forme de tenons (31) et de mortaises (30).

6. Vanne d'arrêt suivant la revendication 1 et 3, 4 ou 5, caractérisée en ce que le cône (18) est muni d'un épaulement (32) en saillie destiné à maintenir ou à fixer un anneau (27).

**Claims**

1. Stop valve with a conical valve seat (7) and a valve disc (3) whose edge (10) rests against the valve seating (7), whereby the edge (10) is the outer side of a projection (11), which extends from a base (9) which overlies the valve seat (7) in the direction of the closing movement of the valve disc (3) and the projection (11), is thickened from a region (14) which is thinnest in the radial direction in front of its free end to form a ring (15) in the area of the valve seat (7) with a radial wall-thickness increased 1.5-fold or more, which, without radial support from the base (9), absorbs the essential part of the radial forces occurring at the valve seating (7) due to its small resistance to ovalisation, and whereby the base (9) is elongated into a cone (18) projecting from the ring (15) in the direction of the closing movement, and this cone (18), together with the projection (11), forms a known streamlined contour with a gap (23) between the ring (15) and the cone (18) which is greater than the deformation of the projection (11) in the radial direction.

2. Stop valve as claimed in claim 1, characterised in that the projection (11) has a cylindrical form in the unreinforced area (14).

3. Stop valve as claimed in claim 1 or 2, characterised in that the ring (15) is subdivided in the radial direction one or more times (onion-peel form).

4. Stop valve as claimed in claim 3, characterised in that the cross-section of the rings (28, 29) produced by subdivision is greater in the axial direction than in the radial direction.

5. Stop valve as claimed in claim 3 or 4, characterised in that the rings (28, 29) interlock in the radial direction as a tonge (30) and a groove (31) joint.

6. Stop valve as claimed in claim 1 and 3, 4 or 5, characterised in that the cone (18) is provided with a projecting shoulder (32) for holding or securing a ring (27).

FIG 1

FIG 2

FIG 3